# EUROPÄISCHE PATENTSCHRIFT

(11) **EP 1 818 194 B1**
(45) Veröffentlichungstag und Bekanntmachung des Hinweises auf die Patenterteilung: **20.08.2008**
(21) Anmeldenummer: 07001817.1
(22) Anmeldetag: 27.01.2007
(51) Int. Cl.: B60G 21/05, B60G 9/04, B60B 35/02

(54) **Verbundlenkerachse**
Twist beam axle
Essieu à traverse déformable en torsion

(30) Priorität: 08.02.2006 DE 102006005965
(43) Veröffentlichungstag der Anmeldung: 15.08.2007
(73) Patentinhaber: Benteler Automobiltechnik GmbH, 33104 Paderborn (DE)
(72) Erfinder: Christophliemke, Wigbert, 33758 Schloss Holte-Stukenbrock (DE); Drabon, Rodscha, 33154 Salzkotten (DE)
(74) Vertreter: Ksoll, Peter

(56) Entgegenhaltungen:
- EP-A- 0 552 537
- EP-A- 1 080 954
- DE-A1- 19 939 485
- DE-C1- 19 642 995
- FR-A- 2 857 302

## Beschreibung

Die Erfindung betrifft eine Verbundlenkerachse für Kraftfahrzeuge gemäß den Merkmalen im Oberbegriff von Anspruch 1.

Eine solche Verbundlenkerachse ist durch die DE 196 42 995 C1 bekannt. Der Querträger einer Verbundlenkerachse, auch Torsionsprofil genannt, ist ein hochbelastetes Bauteil, dessen Lebensdauer wesentlich durch Materialeigenschaften im Bereich der Längskanten des Querträgers bestimmt wird. Bei aus geschnittenen Metallblechen hergestellten Querträgern können im Bereich der geschnittenen Längskanten Zugspannungen und Mikrorisse auftreten, welche die Lebensdauer des Querträgers und damit der Verbundlenkerachse insgesamt beeinträchtigen. Diesbezüglich wird im Stand der Technik vorgeschlagen, die Längskanten bzw. freien Enden der Schenkel des Querträgers zu stauchen, um Druckeigenspannungen im Bereich der Längskanten zu erzeugen. Durch das Stauchen werden die Oberflächen der Schnittkanten geglättet und vorhandene Mikrorisse kaltverschweißt. In bevorzugter Ausführung sollen bei der DE 196 42 995 C1 zunächst Längsrillen mit kleinem Abstand von den Längskanten in die Schenkel eingepresst und dabei oder danach die Längskanten gestaucht werden.

Der bekannte Vorschlag stellt bereits einen Schritt zur Erhöhung der Lebensdauer einer Verbundlenkerachse bzw. deren Querträger dar. Dennoch erscheint die Art der Stauchung verbesserungswürdig.

Bei dem aus der DE 199 39 485 A1 bekannten Querträger einer Verbundlenkerhinterachse sind die freien Enden der Schenkel des Querträgers wulstförmig verbreitert, wobei der Querträger gußtechnisch hergestellt ist.

Der Erfindung liegt ausgehend vom Stand der Technik die Aufgabe zugrunde, eine Verbundlenkerachse mit einem herstellungstechnisch verbesserten Querträger und weiter erhöhter Lebensdauer aufzuzeigen.

Die Lösung dieser Aufgabe besteht nach der Erfindung in einer Verbundlenkerachse gemäß den Merkmalen von Anspruch 1.

Kernpunkt der Erfindung bildet die Maßnahme, dass die freien Enden der Schenkel angestaucht sind und - im Gegensatz zum Stand der Technik - einen gegenüber der Wanddicke der Schenkel verdickten Endabschnitt besitzen, wobei das Verhältnis der Wandstärke eines Schenkels zur Wandstärke eines Endabschnitts zwischen 1:1,2 und 1:1,6 bemessen ist und die Übergänge zwischen der Stirnfläche und den Längsflächen eines Endabschnitts als Schrägflächen sowie die Übergänge zwischen den Längsflächen eines Endabschnitts und dem Schenkel als Schrägflächen ausgebildet sind.

Der Querträger wird aus einer Blechplatine mit geschnittenen Längskanten hergestellt. Das Schneiden der Blechplatine erfolgt durch Feinschneiden, auch Feinstanzen genannt. Das Feinschneiden ist ein Fertigungsverfahren, bei dem in einem Arbeitsgang gratfreie Werkstücke mit glatten rechtwinkligen Schnittflächen hergestellt werden. Der Schneidspalt im Schneidwerkzug beträgt hierbei nur 0,5 % der Blechdicke.

Die Längskantenbereiche der Blechplatine oder des hieraus U- oder V-förmig geformten Querträgeres werden dann in einem Kaltumformvorgang angestaucht, so dass an den freien Enden der Schenkel gegenüber der Wanddicke der Schenkel verdickte Endabschnitte erzeugt werden. Die verdickte Ausgestaltung der Endabschnitte gewährleistet Bauteilkanten mit hoher Qualität, bei denen Mikrorisse zuverlässig kaltverfestigt sind. Des Weiteren führt die Verdickung der Endabschnitte zu Druckeigenspannungen in diesen Bereichen, welche die Rissanfälligkeit deutlicher als bisher vermindern und insgesamt die Lebensdauer des Querträgers und damit auch der Verbundlenkerachse erhöht. Insbesondere eine Kombination der Fertigungsschritte des Feinschneidens und der anschließenden Kaltumformung zum Verdicken der Endabschnitte führen zu einer deutlichen Qualitätssteigerung. Die Fertigung des Querträgers ist rationell und kostengünstig.

Vorteilhafte Ausgestaltungen des grundsätzlichen Erfindungsgedankens sind Gegenstand der abhängigen Ansprüche 2 und 3.

Theoretische und praktische Untersuchungen haben ergeben, dass das Verhältnis der Wanddicke eines Schenkels zur Wanddicke eines Endabschnitts zwischen 1:1,2 und 1:1,6 bemessen sein sollte. Insbesondere ein Verhältnis der Wanddicke eines Schenkels zur Wanddicke eines Endabschnitts von 1:1,4 wird im Rahmen der Erfindung als vorteilhaft angesehen. Ein solcher Querträger lässt eine Steigerung der Lebensdauer bei gleicher Ausgangswandstärke von bis zu 30 % und mehr erwarten.

Die quer zur Längserstreckung des Querträgers gemessene Länge eines verdickten Endabschnitts sollte vorzugsweise größer zumindest jedoch gleich der Wanddicke eines Schenkels bemessen sein. Auch diese Maßnahme wirkt sich vorteilhaft auf die lebensdaueroptimierte Bauteilkante aus.

Die Übergänge zwischen der Stirnfläche eines Endabschnitts zu dessen Längsflächen sind als Schrägflächen ausgebildet. Grundsätzlich kann der Winkel zwischen einer Schrägfläche zur Mittellängsachse eines Schenkels zwischen 20° und 70° liegen. Vorteilhafterweise nimmt eine solche Schrägfläche zur Mittellängsachse eines Schenkels einen Winkel zwischen 40° und 50°, insbesondere von 45° ein.

Auch die Übergänge zwischen den Längsflächen eines Endabschnitts und dem Schenkel sind als Schrägflächen ausgebildet. Hier hat sich gezeigt, dass der Winkel der Schrägfläche zur Mittellängsachse eines Schenkels zwischen 25° und 35°, insbesondere bei 30° bemessen sein sollte. Generell kann aber auch hier der Winkel zwischen 20° und 70° angesiedelt sein.

Die verdickten Endabschnitte sind symmetrisch bezogen auf die Mittellängsachse der Schenkel. Die Längskantenbereiche der verdickten Endabschnitte sind gefast und weisen Radien zwischen 1 mm und 3 mm auf. Die gerundeten Längskantenbereiche ebenfalls wie die Schrägflächen an den Übergängen führen zu einem homogenen Kraftverlauf in den hochbelasteten Zonen der Bauteilkanten.

Vorzugsweise kommt zur Fertigung des Querträgers aber auch der Längslenker ein Stahlblech zur Anwendung aus einer Stahllegierung mit einem Kohlenstoffanteil zwischen 0,15 Gew.-% bis 2,0 Gew.-%. Dieser Werkstoff weist die für die hohen Anforderungen an Verbundlenkerachsen notwendigen Werkstoffeigenschaften auf. Insbesondere bietet sich eine Stahllegierung an, die in Gewichtsprozenten ausgedrückt besteht aus Kohlenstoff (C) 0,18 % bis 0,3 %, Silizium (Si) 0,1 % bis 0,7 %, Mangan (Mn) 1,0 % bis 2,50 %, Chrom (Cr) 0,1 % bis 0,8 %, Molybdän (Mo) 0,1 % bis 0,5 %, Titan (Ti) 0,02 % bis 0,05 %, Bor (B) 0,002 % bis 0,005 %, Aluminium (Al) 0,01 % bis 0,06 %, Schwefel (S) maximal 0,01 %, Phosphor (P) maximal 0,025 %, wobei der Rest aus Eisen (Fe) besteht einschließlich von etwaigen erschmelzungsbedingten Verunreinigungen. Eine solche Stahllegierung besitzt neben den guten Werkstoffeigenschaften für Verbundlenkerachsen ein dem Verfahren des Feinschneidens angepasstes Stahlgefüge mit guten Fließeigenschaften, bei dem die Eisenkarbide in kugeliger Form vorliegen und einen hohen Einformungsgrad aufweisen. Folglich lässt sich das Stahlblech gut mitttels Feinschneiden bearbeiten.

Die Erfindung ist nachfolgend anhand eines Ausführungsbeispiels näher beschrieben. Es zeigen:
- Figur 1: im Schema eine Verbundlenkerachse;
- Figur 2: einen vertikalen Querschnitt durch die Darstellung der Figur 1 entlang der Linie A-A und
- Figur 3: das Detail B der Figur 2 in vergrößerter Darstellungsweise.

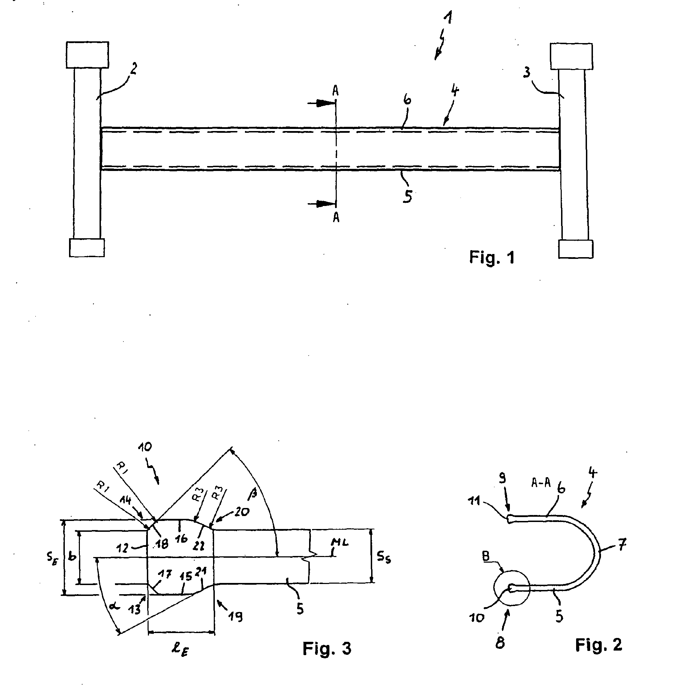

In der Figur 1 ist mit 1 eine Verbundlenkerachse für ein Kraftfahrzeug bezeichnet. Die Verbundlenkerachse 1 umfasst im Wesentlichen zwei radführende Längslenker 2, 3 und einen die beiden Längslenker 2, 3 verbindenden Querträger 4.

Bei zusammenschauender Betrachtung der Figuren 1 und 2 erkennt man, dass der Querträger 4 über seine Länge ein U-förmiges einlagiges Querschnittsprofil besitzt mit zwei Schenkeln 5, 6 und einem die Schenkel 5, 6 verbindenden Firstabschnitt 7.

Die Fertigung des Querträgers 4 erfolgt aus einer mittels Feinschneiden zurechtgeschnittenen rechteckigen Ausgangsplatine aus Stahlblech. Hierbei wird eine gratfreie Ausgangsplatine mit glatten rechtwinkligen Schnittflächen, insbesondere entlang der Längskanten der Ausgangsplatine, hergestellt.

Die Schenkel 5, 6 sind an ihren freien Enden 8, 9 angestaucht und besitzen einen gegenüber der Wandstärke s_{S} der Schenkel 5, 6 verdickten Endabschnitt 10, 11 (siehe hierzu auch Figur 3). Das Stauchen der Endabschnitte 10, 11 erfolgt an den Längskanten der Ausgangsplatine oder an dem bereits U-förmig umgeformten Querträger 4 mittels eines Kaltumformvorgangs. Hierbei werden Mikrorisse in den Längskanten kaltverfestigt und Druckeigenspannungen entlang der Bauteilkanten induziert. Die Druckeigenspannungen in den Endabschnitten 10, 11 bewirken eine Verminderung der Rissanfälligkeit des Querträgers 4 in diesen Bereichen.

Besonders vorteilhafte Bauteileigenschaften wurden festgestellt, wenn das Verhältnis der Wandstärke s_{S} eines Schenkels 5, 6 zur Wandstärke s_{E} eines Endabschnitts 10, 11 zwischen 1:1,2 und 1:1,6 bemessen ist. Im dargestellten Ausführungsbeispiel beträgt das Verhältnis 1:1,4.

Die quer zur Längserstreckung des Querträgers 4, also entlang der Mittellängsachse ML eines Schenkels 5, 6 gemessen Länge I_{E} eines Endabschnitts 10, 11 ist größer oder zumindest gleich der Wandstärke s_{S} eines Schenkels 5, 6 bemessen. Im dargestellten Ausführungsbeispiel ist die Längs I_{E} 7 mm, wohingegen die Wandstärke s_{S} 6 mm beträgt. Die konstruktive Ausgestaltung und die Mittelachse ML können auch asymetrisch sein.

Die Breite b der Stirnfläche 12 eines Endabschnitts 10, 11 entspricht der Wandstärke s_{S} eines Schenkels 5, 6. Die Übergänge 13, 14 zwischen der Stirrnfläche 12 und den Längsflächen 15, 16 der Endabschnitte 10, 11 sind als Schrägflächen 17, 18 ausgebildet und nehmen zur Mittellängsachse ML eines Schenkels 5, 6 einen Winkel α von ca. 30° ein. Auch die Übergänge 19, 20 zwischen den Längsflächen 15, 16 eines Endabschnitts 10, 11 und einem Schenkel 5, 6 sind als Schrägflächen 21, 22 ausgebildet. Diese nehmen zur Mittellängsachse eines Schenkels 5, 6 einen Winkel β von 45° ein.

In der Figur 3 sind des Weiteren mit R1 die Radien an den Längskantenbereichen zwischen der Stirnfläche 12 sowie den Längsflächen 10, 11 und den Schrägflächen 17, 18 einerseits und mit R3 die Radien an den Längskantenbereichen zwischen den Längsflächen 10, 11 bzw. den Schenkeln 5, 6 und den Schrägflächen 21, 22 bemaßt.

Die beschriebene Ausgestaltung der verdickten Endabschnitte 10, 11 an den Schenkeln 5, 6 des Querträgers 4 und die so erzeugte gezielte Materialanhäufung im Längskantenbereich des Querträgers 4 mit dem Aufbau von Druckeigenspannungen schaffen einen in der Lebenserwartung deutlich gesteigerten Querträger 4, der sowohl statisch als auch dynamisch hochbelastbar ist. Die Rissanfälligkeit in den Endabschnitten 10, 11 ist deutlich reduziert. Insgesamt kann die Lebenserwartung einer Verbundlenkerachse 1 wesentlich gesteigert werden.

### Bezugszeichen:

1 - Verbundlenkerachse
2- Längslenker
3- Längslenker
4- Querträger
5- Schenkel
6- Schenkel
7 - Firstabschnitt
8 - Ende v. 5
9- Ende v. 6
10 - Endabschnitt
11 - Endabschnitt
12 - Stirnfläche v. 10, 11
13 - Übergang
14 - Übergang
15 - Längsfläche v. 10, 11
16 - Längsfläche v. 10, 11
17 - Schrägfläche
18 - Schrägfläche
19 - Übergang
20 - Übergang
21 - Schrägfläche
22 - Schrägfläche

- s_{S} -: Wandstärke v. 5, 6
- s_{E} -: Wandstärke v. 10, 11
- I_{E} -: Länge v. 10, 11
- b -: Breite v. 12
- ML -: Mittellängsachse v. 5, 6
- α-: Winkel
- β-: Winkel

## Patentansprüche

1. Verbundlenkerachse für Kraftfahrzeuge, welche zwei durch einen Querträger (4) verbundene Längslenker (2, 3) aufweist und der Querträger (4) über zumindest den wesentlichen Teil seiner Länge ein U- oder V-förmiges einlagiges Querschnittsprofil besitzt mit zwei Schenkeln (5, 6) und einen die Schenkel (5, 6) verbindenden Firstabschnitt (7), wobei die Schenkel (5, 6) an ihren freien Enden (8, 9) gestaucht sind, und die freien Enden (8, 9) der Schenkel (5, 6) einen gegenüber der Wandstärke (sₛ) der Schenkel (5, 6) verdickten Endabschnitt (10, 11) besitzen, **dadurch gekennzeichnet, dass** das Verhältnis der Wandstärke (sₛ) eines Schenkels (5, 6) zur Wandstärke (S_{E}) eines Endabschnitts (10, 11) zwischen 1 :1,2 und 1 :1,6 bemessen ist und die Übergänge (13, 14) zwischen der Stirnfläche (12) und den Längsflächen (15, 16) eines Endabschnitts (10, 11) als Schrägflächen (17, 18) sowie die Übergänge (19, 20) zwischen den Längsflächen (15, 16) eines Endabschnitts (10, 11) und dem Schenkel (5, 6) als Schrägflächen (21, 22) ausgebildet sind.

2. Verbundlenkerachse nach Anspruch 1, **dadurch gekenn** - **zeichnet**, dass die quer zur Längserstreckung des Querträgers (4) gemessene Länge (I_{E}) eines Endabschnitts (10, 11) größer oder gleich der Wandstärke (Sₛ) eines Schenkels (5, 6) bemessen ist.

3. Verbundlenkerachse nach Anspruch 1 oder 2, **dadurch gekennzeichnet, dass** die Längskantenbereiche der verdickten Endabschnitte (10, 11) gerundet sind.

## Claims

1. Semi-rigid axle for motor vehicles, which has two longitudinal links (2, 3) which are connected by means of a transverse member (4), and the transverse member (4) has, over at least a significant part of its length, a U-shaped or V-shaped single-layer cross-sectional profile with two limbs (5, 6) and an apex section (7) connecting the limbs (5, 6), with the limbs (5, 6) being upset at their free ends (8, 9), and with the free ends (8, 9) of the limbs (5, 6) having a thickened end section (10, 11) in relation to the wall thickness (sₛ) of the limbs (5, 6), **characterized in that** the ratio of the wall thickness (sₛ) of a limb (5, 6) to the wall thickness (S_{E}) of an end section (10, 11) is dimensioned to be between 1 : 1.2 and 1 : 1.6, and the transitions (13, 14) between the end face (12) and the longitudinal faces (15, 16) of an end section (10, 11) are formed as inclined faces (17, 18), and the transitions (19, 20) between the longitudinal faces (15, 16) of an end section (10, 11) and the limb (5, 6) are formed as inclined faces (21, 22).

2. Semi-rigid axle according to Claim 1, **characterized in that** the length (I_{E}), measured transversely with respect to the longitudinal extent of the transverse member (4), of an end section (10, 11) is dimensioned to be greater than or equal to the wall thickness (sₛ) of a limb (5, 6) .

3. Semi-rigid axle according to Claim 1 or 2, **characterized in that** the longitudinal edge regions of the thickened end sections (10, 11) are rounded.

## Revendications

1. Essieu à traverse déformable en torsion pour véhicule automobile, qui présente deux bras oscillants longitudinaux (2, 3) raccordés par une traverse (4) et la traverse (4) présente, au moins sur la partie essentielle de sa longueur, un profil en section transversale monocouche en forme de U ou de V avec deux fusée d'essieu (5, 6) et une section apicale (7) reliant l'une des fusée d'essieu (5, 6), les fusée d'essieu (5, 6) étant refoulées sur leurs extrémités libres (8, 9), et les extrémités libres (8, 9) des fusée d'essieu (5, 6) présentant une section d'extrémité (10, 11) épaissie par rapport à l'extrémité des parois (sₛ) des fusée d'essieu (5, 6), **caractérisé en ce que** le rapport entre l'épaisseur de paroi (sₛ) d'une fusée d'essieu (5, 6) et l'épaisseur de paroi (S_{E}) d'une section d'extrémité (10, 11) est dimensionné entre 1:1,2 et 1:1,6, et les transitions (13, 14) entre les faces frontales (12) et les faces longitudinales (15, 16) d'une section d'extrémité (10, 11) sont configurées en tant que faces obliques (17, 18), les transitions (19, 20) entre les surfaces longitudinales (15, 16) d'une section d'extrémité (10, 11) et la fusée d'essieu (5, 6) étant également configurées en tant que faces obliques (21, 22).

2. Essieu à traverse déformable en torsion selon la revendication 1, **caractérisé en ce que** la longueur (I_{E}) d'une section d'extrémité (10, 11) mesurée transversalement par rapport à l'extension longitudinale de la traverse (4) est supérieure ou égale à l'épaisseur de paroi (sₛ) d'une fusée d'essieu (5, 6).

3. Essieu à traverse déformable en torsion selon la revendication 1 ou 2, **caractérisé en ce que** les zones de bord longitudinales des sections d'extrémité épaissies (10, 11) sont arrondies.
